# EUROPEAN PATENT SPECIFICATION

(11) **EP 1 195 123 B1**
(45) Date of publication and mention of the grant of the patent: **14.07.2004**
(21) Application number: 01000512.2
(22) Date of filing: 28.09.2001
(51) Int. Cl.: A47J 47/00

(54) **Cutting board for facilitating the cutting of foods, in particular leaf vegetables**
Schneidebrett zum Erleichtern des Schneidens von Nahrungsmitteln, insbesondere Blattgemüse
Planche à découper pour faciliter le découpage de nourriture, en particulier des légumes en feuilles

(30) Priority: 05.10.2000 IT RM000184 U
(43) Date of publication of application: 10.04.2002
(73) Proprietor: Galasso, Beatrice, 00183 Roma (IT)
(72) Inventor: Galasso, Beatrice, 00183 Roma (IT)
(74) Representative: Leone, Mario

(56) References cited:
- EP-A- 0 384 466
- BE-A- 484 269
- GB-A- 2 310 590
- US-A- 5 311 813

## Description

The present invention relates to a cutting board for facilitating the cutting of foods, in particular leaf vegetables.

In order to cut foods like, e.g., vegetables, the latter are generally placed on a cutting board and held in position with one hand, whereas with the other hand a cutting device, typically a knife, is operated.

The cutting step thus carried out and the associated technical means entail some relevant drawbacks.

First of all, after being cut the foods tend to scatter around the cutting board or to fall out therefrom.

Moreover, an unguided knife can fail to carry out a straight cutting, and even get out of a user's control with the risk of injuries him/her.

Furthermore, when leaf vegetables like, e.g. lettuce, are cut into pieces, generally, they have just been washed, thus tending to be slippery.

EP 0 384 466 discloses a utensil for slicing sausages and similar items, comprising a central tubular body for guiding displacement of the item to be sliced, which body is secured to a supporting board. At the longitudinal ends of the central body two lateral bodies, tubular too, are placed, in such a way that two slots for receiving the blade of a knife are defined between facing end surfaces of the central tubular body and the lateral bodies.

US 5 311 813 discloses a cutting surface according to the preamble of claim 1, having a convex, collapsible, tent-like cover with a frontal opening for inserting both hands of a user.

The technical problem underlying the present invention is to provide a cutting board allowing to overcome the drawbacks hereto mentioned with reference to the known art.
This problem is solved by means of a cutting board for facilitating the cutting of foods according to claim 1.

According to the same inventive concept, the present invention further relates to a cutting set, comprising a cutting board for facilitating the cutting of foods as defined in claim 1 and a cutting device.

The present invention provides some relevant advantages.

The main advantage lies in that it is not necessary to manually keep the foods still during the cutting and in that the foods, once cut, anyway remain confined within the abovementioned retaining region.

Moreover, the walls of the slits guide the cutting device during the cutting itself, facilitating an accurate execution and regularity thereof.

Concomitantly, the cover member shields the user's body from possible random interference with the cutting device, enhancing the safety of the operation.

Other advantages, features, and the modes of employ of the present invention will be made apparent in the following detailed description of some embodiments thereof, given by way of example and without limitative purposes. Reference will be made to the figures of the accompanying drawings, wherein:
Figure 1 is a perspective view of an embodiment of the cutting board for facilitating the cutting of foods according to the present invention, in an opened configuration;
Figure 2 is a perspective view of the cutting board of Figure 1, in a closed configuration;
Figure 3 is a sectional view of the cutting board of Figure 2, taken along line A-A of the latter;
Figures 4A and 4B relate to the modes of employ of the cutting board of Figure 1, showing perspective views thereof;
Figure 5 is a perspective view of a variant embodiment of the cutting board for facilitating the cutting of foods according to the present invention; and
Figure 6 is a perspective view of another embodiment of the cutting board for facilitating the cutting of foods according to the present invention.

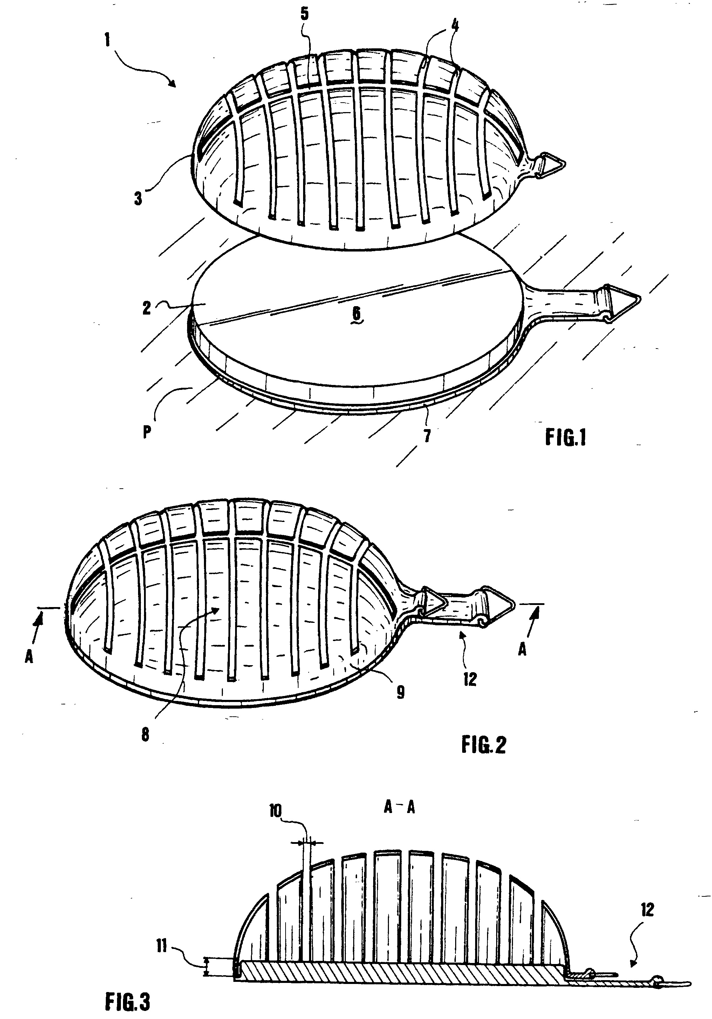

First of all, with reference to Figures 1 and 2, a cutting board for facilitating the cutting of foods is overall indicated with 1. The cutting board 1 of the present embodiment is specifically designed to cut into pieces leaf vegetables like, e.g., lettuce.

According to the invention, board 1 comprises a base 2, apt to be laid on a working plane P, and a cover member 3. Again, according to the invention, the latter has a plurality of slits apt to allow the passage therethrough of a cutting device, like, e.g., a knife,. In particular, in the present embodiment the cover member 3 provides a plurality of substantially parallel transverse slits, each indicated with 4, and a longitudinal slit 5 substantially orthogonal to such transverse slits 4.

Hereinafter, each of the hereto introduced components will be described in more detail.

Again, with reference to Figures 1 and 2, in the present embodiment base 2, when observed in a plan view, has a substantially oval shape, to receive lettuce leaves rested thereon in an extended configuration. In particular, this comprises a raised supporting platform 6, substantially centred with respect to base 2 itself, onto which the food to be cut can be laid. Base 2 further provides a peripheral abutment edge 7 circumscribed to platform 6, apt to receive in abutment the cover member 3.

Base 2 can be made of a material selected in a group comprising wood and hard plastics.

Cover member 3 has an elongated and substantially convex shape. In particular, in the present embodiment this member is substantially hemi-ellipsoid - shaped, in order to be overlappable to the oval base 2. Therefore, cover member 3 has base dimensions which are slightly greater than those of the raised platform 6, so that, upon said overlapping, it abuts onto the peripheral abutment edge 7 of base 2.

As it is shown in Figure 2, when cover member 3 is overlapped to base 2, between the raised platform 6 of the latter and cover member 3 itself a retaining region 8 is defined, inside which the food to be cut can be housed.

In order to allow an even cutting, the transverse slits 4 are obtained onto cover member 3 according to a substantially constant pitch, indicated with a reference arrow 10 in Figure 3.

Each one of the transverse slits 4 extends over almost the entire extension of cover member 3, with the sole exclusion of a bottom annular portion 9 thereof. As it may be better understood with reference to the modes of employ of cutting board 1, in order to allow for a complete cutting of the foods resting on base 2, the height of this annular portion 9, indicated with a reference arrow 11 in Figure 3, is substantially equal to or lower than the thickness of the raised platform 6 of base 2.

As abovementioned, cover member 3 further provides the longitudinal slit 5, obtained in a centred position thereon and also having an extension such as not to involve said annular portion 9.

The cover member 3 can be made of hard plastics.

Moreover, preferably cover member 3 will be transparent, in order to enable the user to check the cutting operation.

Both base 2 and cover member 3 have respective hooking means 12 for hanging the cutting board 1, e.g., to a common wall hook. In particular, in the present embodiment such means 12 are metallic annular members having a triangle-shaped contour, always indicated with 12.

According to a variant of the hereto disclosed embodiment, the cutting board of the invention is provided with reversible restraining means (which are not shown in the figures), apt to reversibly restrain the cover member onto the base.In this way, the cutting board can be easily held, turned upside down and shaken, to facilitate the downflow of water, if any, in case the foods to be cut have just been washed. These reversible restraining means can be, e.g., release jaws.

According to another variant embodiment, the cover member is rotatably connected to the base, e.g., with a hinge, instead of being completely detachable therefrom. In this case, the cutting board of the invention can assume a configuration of insertion of the food to be cut, in which the cover member is rotated so as to move it away from the base, as well as a cutting configuration, in which the cover member abuts on the base.

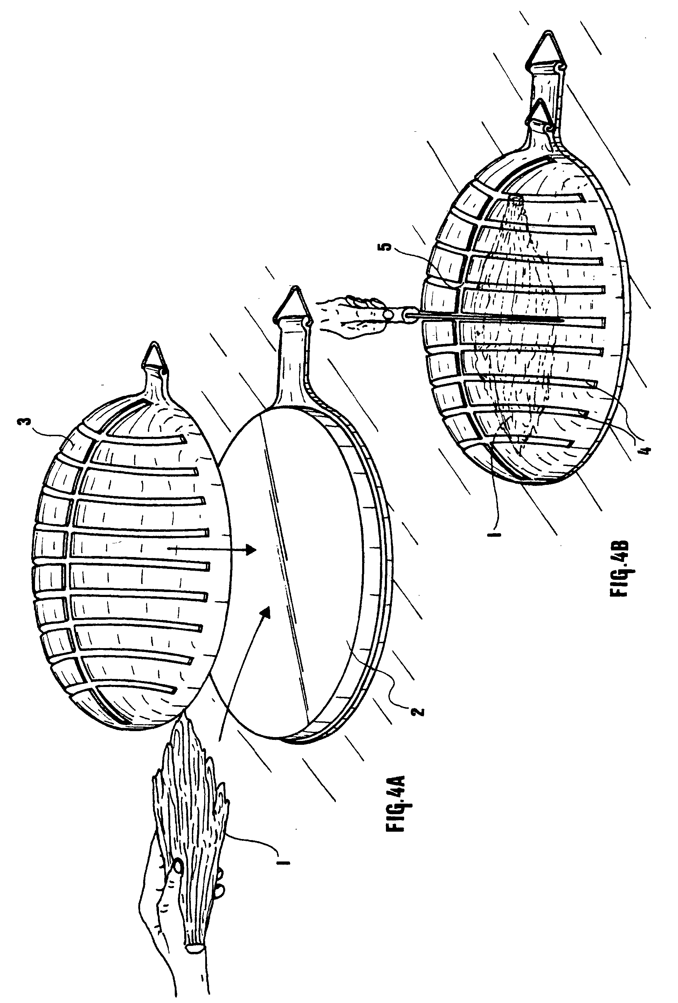

The modes of employ of the cutting board of the invention will hereinafter be further disclosed with reference to Figures 4A and 4B. By way of example, hereinafter the case of cutting of lettuce leaves, indicated with I in said Figures, will be considered.

As it is shown in Figure 4A, first of all a bunch of freshly-washed leaves I is laid onto the raised platform 6 of base 2. Then, cover member 3 is put on the top of base 2, so that the leaves I be housed within said retaining region 8. Optionally, member 3 and base 2 can be secured therebetween with the abovementioned reversible restraining means.

As it is shown in Figure 4B, in order to carry out the cutting a cutting device of a traditional type, in particular a knife C, is employed. The blade of the latter can be first inserted through the longitudinal slit 5, until penetrating into the leaves I and cutting the latter lengthwise. Then, the blade can be inserted through all or some of the transverse slits 4, in sequence, to cut the leaves into strips of a desirable width.

At this stage, it may be better appreciated that, in case of hard foods, the cutting board of the invention enables the user to operate the blade with two hands, so as to exert a greater cutting force, without the user having to worry about keeping the food still or about the fact that the latter, once cut, can totally or partially fall out of the base.

Lettuce I, after being cut into pieces, can easily be collected into cover member 3, by virtue of the convex shape thereof, by merely turning cutting board 1 upside down, and then be poured in a lettuce bowl.

In case of foods other than leaf vegetables, e.g., a sliced cake or a sliced salami, these might be left on base 2 and served directly therefrom.

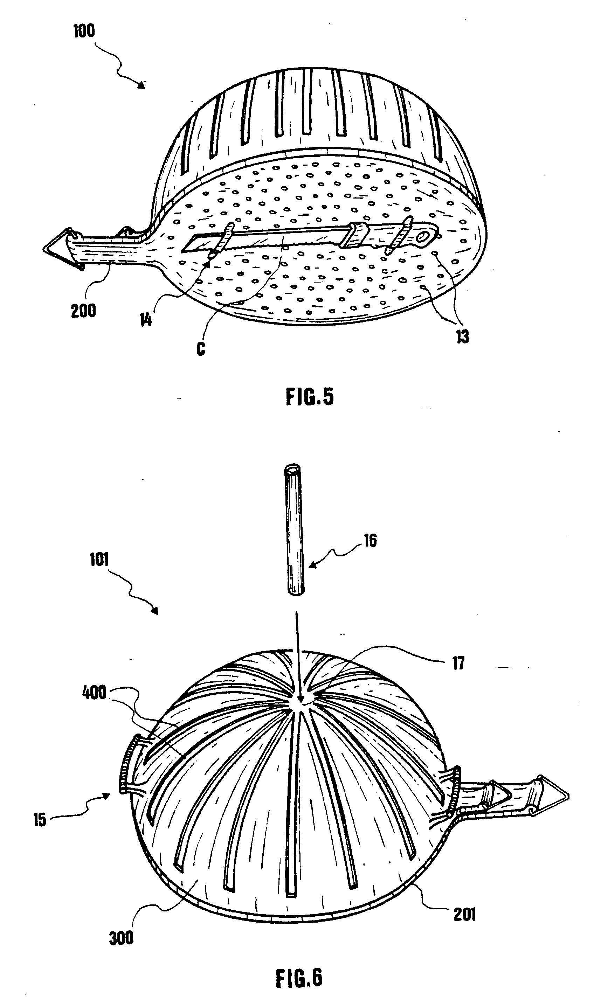

Figures 5 and 6 each relate to a further embodiment of the invention. These embodiments will be solely described in relation to the members that differentiate them from the aboveconsidered first embodiment. Similar components will be indicated with the same number reference.

First of all, with reference to said Figure 5, a cutting board for facilitating the cutting of foods is generally indicated with 100. This has a base 200 with a plurality of draining holes 13, for enabling said downflow of washing water, if any. Of course, holes 13 are particularly useful in said case of cutting leaf vegetables. In particular, in this case the leaves can be left to drain into the cutting board 100 prior to being cut. Moreover, as hereto described with reference to the abovedisclosed main embodiment, before the cutting, board 100 can be shaken in order to facilitate the water downflow.

According to the present variant embodiment, base 200 has also means 14 for housing a cutting device. In particular, base 200 comprises two slots, which are also indicated with 14, located at a bottom face thereof and apt to allow for the insertion of a knife C therethrough. In this way, when the cutting board 100 is put away, knife C stays in said slots 14, adhering to the relative face of base 200.

Slots 14 can be made of an elastic material, to facilitate the engagement thereof by knife C. However, regardless of the material used, the slots should have such properties that prevent it from being damaged by the contact with the blade of knife C.

According to this variant embodiment, the cutting board of the invention can therefore be provided to an end-user in a cutting set, also comprising this cutting device C.

It may be appreciated that the location of slots 14 at the bottom face of the base 200, i.e., of the overlooking face, during their use on the supporting plane, has been made in a way that the slots do not interfere with the foods laid on the top face of the base itself.

Now, with reference to Figure 6, a cutting board 101 for facilitating the cutting of foods has been mainly designed to cut round-shaped foods, like, e.g., cakes, into slices. To this end, cutting board 101 has a base 201 which is substantially round in a plan view.

Likewise, the cutting board comprises a cover member 300 of convex shape, e.g., substantially hemi-spherical, having a plurality of slits 400 obtained according to a substantially radial arrangement.

Cover member 300 further provides a pair of protruding handles 15, each having a substantially semicircular contour. These handles 15 facilitate the positioning of cover member 300, as well as the lifting thereof once the food has been cut into slices.

According to the present embodiment, the cutting board of the invention further provides a substantially cylinder-shaped cutting punch 16, apt to be driven in through cover member 300 in correspondence of a substantially circular central port 17 thereof. In particular, port 17 is obtained onto cover member 300 in correspondence of the converging point of the radial slits 400.

The cylinder shaped punch 16 can be operated after the food in correspondence of the radial slits 400 have been cut into slices. In this way, the punch 16 allows for the elimination of the ends of such slices, by cutting a central cylinder-shaped piece of cake. Hence, the final slices do not have a pointed end, easily prone to disjunction, and therefore they are easier to be handled. In particular, those slices could be easily served by lifting them onto the blade of a cake knife.

According to another variant embodiment, it could be provided that the cover member have a telescopic structure, in order to adapt to the height of the food to be cut.

Lastly, it may be understood that the dimensions of the cutting board and of the individual components thereof, as well as the location of the related individual or plural slits can differ from the abovedisclosed, again with a view of adapting to the type of food to be cut.

The present invention has hereto been described with reference to preferred embodiments thereof. It is understood that there can be other embodiments afferent to the same inventive concept, all falling within the protective scope of the appended claims.

## Claims

1. A cutting board (1; 100; 101) for facilitating the cutting of foods, comprising:
- a base (2; 200; 201), apt to be arranged on a supporting plane (P); and
- a cover member (3; 300), having a substantially convex shape and apt to be overlapped to said base in such a way that between said base and said cover member a retaining region (8) is defined, inside which a food (I) to be cut can be housed,
**characterised in that** said cover member has a plurality of slits (4, 5; 400) apt to allow the passage therethrough of a cutting device (C) operated by a user to cut the food housed in said retaining region and apt to guide said cutting device during the cutting itself.

2. The cutting board (1; 100) according to claim 1, wherein said plurality of slits comprises substantially parallel transverse slits (4).

3. The cutting board (1; 100) according to the preceding claim, wherein said transverse slits (4) are obtained on said cover member (3) according to a substantially constant pitch (10).

4. The cutting board (1; 100) according to claim 2 or 3, wherein said plurality of slits comprises a longitudinal slit (5).

5. The cutting board (101) according to claim 1, wherein said plurality of slits comprises slits (400) obtained according to a substantially radial arrangement.

6. The cutting board (101) according to the preceding claim, comprising a cutting punch (16) and a corresponding port (17), obtained in said cover member (300) for allowing the insertion of said punch therethrough.

7. The cutting board (101) according to the preceding claim, wherein said cutting punch (16) is substantially cylinder-shaped and said port (17) is centrally obtained on said cover member (300), in correspondence of a converging point of said radial slits (400).

8. The cutting board (1; 100) according to any one of the preceding claims, wherein said cover member (3) is transparent.

9. The cutting board (100) according to any one of the preceding claims, wherein said base (200) has a plurality of through drain holes (13).

10. The cutting board (1) according to any one of the preceding claims, wherein said base (2) has a raised platform (6) to lay the food to be cut, and a peripheral abutment edge (7), circumscribed to said platform, apt to receive in abutment said cover member (3).

11. The cutting board (100) according to any one of the preceding claims, wherein said base (200) comprises means (14) for housing the cutting device (C).

12. The cutting board (100) according to the preceding claim, wherein said means for housing the cutting device (C) comprises one or more slots (14), located at a bottom face of said base (200).

13. The cutting board (100) according to the preceding claim, wherein said slots (14) are made of an elastic material.

14. The cutting board (1; 100) according to any one of the preceding claims, comprising hooking means (12) for the hanging thereof.

15. A cutting set, comprising a cutting board for facilitating the cutting of foods (1; 100; 101) according to any one of the preceding claims and a cutting device (C).

## Patentansprüche

1. Schneidebrett (1; 100; 101) zum Erleichtern des Schneidens von Nahrungsmitteln, mit:
einer Basis (2; 200; 201), die auf einer Halteebene (P) angeordnet werden kann, und
einem Deckglied (3; 300), das eine im wesentlichen konvexe Form aufweist und derart mit der Basis überlappt werden kann, das zwischen der Basis und dem Deckglied ein Haltebereich (8) definiert wird, in dem ein zu schneidendes Nahrungsmittel (I) aufgenommen werden kann,
**dadurch gekennzeichnet, dass** das Deckglied eine Vielzahl von Schlitzen (4; 5; 400) aufweist, die den Durchgang einer Schneideeinrichtung (C) gestatten, die durch einen Benutzer betätigt wird, um das in dem Haltebereich aufgenommene Nahrungsmittel zu schneiden, wobei sie die Schneideeinrichtung während des Schneidens führen.

2. Schneidebrett (1; 100) nach Anspruch 1, **dadurch gekennzeichnet, dass** die Vielzahl von Schlitzen im wesentlichen parallele Querschlitze (4) sind.

3. Schneidebrett (1; 100) nach dem vorstehenden Anspruch, **dadurch gekennzeichnet, dass** die Querschlitze (4) an dem Deckglied (3) mit einem im wesentlichen konstanten Abstand (10) vorgesehen sind.

4. Schneidebrett (1; 100) nach Anspruch 2 oder 3, **dadurch gekennzeichnet, dass** die Vielzahl von Schlitzen einen Längsschlitz (5) umfasst.

5. Schneidebrett (101) nach Anspruch 1, **dadurch gekennzeichnet, dass** die Vielzahl von Schlitzen im wesentlichen in einer radialen Anordnung vorgesehene Schlitze (400) sind.

6. Schneidebrett (101) nach dem vorstehenden Anspruch, weiterhin **gekennzeichnet durch** einen Schneidestößel (16) und eine entsprechende Öffnung (17), die in dem Deckglied (300) vorgesehen ist, damit der Stößel eingeführt werden kann.

7. Schneidebrett (101) nach dem vorstehenden Anspruch, **dadurch gekennzeichnet, dass** der Schneidestößel (16) im wesentlichen zylinderförmig ist und die Öffnung (17) zentral in dem Deckglied (300) am Ursprung der radialen Schlitze (400) vorgesehen ist.

8. Schneidebrett (1; 100) nach einem der vorstehenden Ansprüche, **dadurch gekennzeichnet, dass** das Deckglied (3) transparent ist.

9. Schneidebrett (100) nach einem der vorstehenden Ansprüche, **dadurch gekennzeichnet, dass** die Basis (200) eine Vielzahl von Ablauflöchern (13) aufweist.

10. Schneidebrett (1) nach einem der vorstehenden Ansprüche, **dadurch gekennzeichnet, dass** die Basis (2) eine erhobene Plattform (6) für die Platzierung des zu schneidenden Nahrungsmittels aufweist, wobei um diese Plattform eine periphere Stoßkante (7) angeordnet ist, die das Deckglied (3) anstoßend aufnehmen kann.

11. Schneidebrett (100) nach einem der vorstehenden Ansprüche, **dadurch gekennzeichnet, dass** die Basis (200) eine Einrichtung (14) zum Aufnehmen der Schneideeinrichtung (C) umfasst.

12. Schneidebrett (100) nach dem vorstehenden Anspruch, **dadurch gekennzeichnet, dass** die Einrichtung zum Aufnehmen der Schneideeinrichtung (C) einen oder mehrere Schlitze (14) aufweist, die an einer Bodenfläche der Basis (200) vorgesehen sind.

13. Schneidebrett (100) nach dem vorstehenden Anspruch, wobei die Schlitze (14) aus einem elastischen Material ausgebildet sind.

14. Schneidebrett (1; 100) nach einem der vorstehenden Ansprüche, die eine Hakeneinrichtung (12) zum Aufhängen aufweist.

15. Schneide-Set, das ein Schneidebrett (1; 100; 10) zum Erleichtern des Schneidens von Nahrungsmitteln nach einem der vorstehenden Ansprüche und eine Schneideeinrichtung (C) umfasst.

## Revendications

1. Planche à découper (1 ; 100; 101) pour faciliter le découpage de nourriture, comprenant :
- une base (2 ; 200 ; 201), apte à être posée sur un plan support (P) ; et
- un élément formant couvercle (3 ; 300), ayant une forme sensiblement convexe et apte à recouvrir ladite base de telle manière qu'entre ladite base et ledit élément formant couvercle, une zone de retenue (8) est définie, à l'intérieur de laquelle peut être logée une nourriture (I) devant être découpée,
**caractérisée en ce que** ledit élément formant couvercle présente un ensemble de fentes (4, 5 ; 400) aptes à permettre à un dispositif de découpage (C) actionné par un utilisateur afin de découper la nourriture logée dans ladite ,zone de retenue de les traverser et apte à guider ledit dispositif de découpage pendant le découpage lui-même.

2. Planche à découper (1 ; 100) selon la revendication 1, dans laquelle ledit ensemble de fentes comprend des fentes transversales sensiblement parallèles (4).

3. Planche à découper (1 ; 100) selon la revendication précédente, dans laquelle lesdites fentes transversales (4) sont obtenues sur ledit élément formant couvercle (3) avec un pas sensiblement constant (10).

4. Planche à découper (1 ; 100) selon la revendication 2 ou 3, dans laquelle ledit ensemble de fentes comprend une fente longitudinale (5).

5. Planche à découper (101) selon la revendication 1, dans laquelle ledit ensemble de fentes comprend des fentes (400) obtenues avec un agencement sensiblement radial.

6. Planche à découper (101) selon la revendication précédente, comprenant un poinçon de découpage (16) et un orifice correspondant (17), obtenu dans ledit élément formant couvercle (300) afin de permettre audit poinçon de le traverser par insertion.

7. Planche à découper (101) selon la revendication précédente, dans laquelle ledit poinçon de découpe (16) est sensiblement en forme de cylindre et ledit orifice (17) est obtenu centré sur ledit élément formant couvercle (300), correspondant avec un point de convergence desdites fentes radiales (400).

8. Planche à découper (1 ; 100) selon l'une quelconque des revendications précédentes, dans laquelle ledit élément formant couvercle (3) est transparent.

9. Planche à découper (100) selon l'une quelconque des revendications précédentes, dans laquelle ladite base (200) présente un ensemble de trous de drainage traversants (13).

10. Planche à découper (1) selon l'une quelconque des revendications précédentes, dans laquelle ladite base (2) présente une plate-forme surélevée (6) afin de déposer la nourriture devant être découpée, et un rebord de butée périphérique (7), sur la circonférence de ladite plate-forme, apte à recevoir en butée ledit élément formant couvercle (3).

11. Planche à découper (100) selon l'une quelconque des revendications précédentes, dans laquelle ladite base (200) comprend des moyens (14) destinés à loger le dispositif de découpage (C).

12. Planche à découper (100) selon la revendication précédente, dans laquelle lesdits moyens pour loger le dispositif de découpage (C) comprennent une ou plusieurs fentes (14), localisées au niveau d'une face formant fond de ladite base (200).

13. Planche à découper (100) selon la revendication précédente, dans laquelle lesdites fentes (14) sont réalisées en un matériau élastique.

14. Planche à découper (1 ; 100) selon l'une quelconque des revendications précédentes, comprenant des moyens d'accrochage (12) destinés à sa suspension.

15. Ensemble de découpage, comprenant une planche à découper destinée à faciliter le découpage de nourritures (1 ; 100 ; 101) selon l'une quelconque des revendications précédentes et un dispositif de découpage (C).
